# EUROPÄISCHE PATENTANMELDUNG

(11) **EP 0 827 820 A1**
(43) Veröffentlichungstag der Anmeldung: **11.03.1998**
(21) Anmeldenummer: 97810634.2
(22) Anmeldetag: 04.09.1997
(51) Int. Cl.: B28B 13/04, B65G 47/24

(54) **Verfahren und Vorrichtung zum Wenden von Formlingen für die Mauerziegelfabrikation**

(30) Priorität: 04.09.1996 CH 2174/96
(71) Anmelder: Freymatic AG, 7012 Felsberg (CH)
(72) Erfinder: Camenisch, Paul, 7013 Domat/Ems (CH)
(74) Vertreter: Riederer, Conrad A., Dr.

(57) **Zusammenfassung**

Das Verfahren und die Vorrichtung ermöglichen ein Wenden von Formlingen (19) für die Ziegelfabrikation, ohne dass bei den Formlingen, insbesondere bei grossformatigen Formlingen die Gefahr einer Beschädigung entsteht.

Nach ihrer Einführung in die Vorrichtung befinden sich ein oder mehrere Formlinge (19) auf der durch eine Förderbahn (15) gebildeten Standfläche (17). Durch eine Bewegung des stillstehenden Förderbandes (15) quer zur Förderrichtung wird der Formling (19) gegen die in senkrechter Stellung sich befindliche Gabel (23) bewegt, so dass eine Fläche des Formlings (19) an dieser anliegt. Hierauf erfolgt das Wenden um praktisch 90 Grad, ohne dass der Formling (19) rutscht und dabei Gefahr läuft, beschädigt zu werden. Der Formling (19) liegt nun auf der in waagrechter Stellung befindlichen Gabel (23) und kann von der Gabel (35) der Transfereinrichtung übernommen und auf dem Trocknerrost (41) abgeladen werden.

## Beschreibung

Die Erfindung betrifft ein Verfahren und eine Vorrichtung zum Wenden von Formlingen, insbesondere grossformatigen Formlingen, für die Mauerziegelfabrikation.

Mauerziegel wurden während Jahrtausenden als sogenannte Vollziegel gefertigt. Dies hat sich mit der Industrialisierung der Ziegelproduktion geändert, denn die Verwendung von Extrusionspressen ermöglichte es, einen Tonstrang mit Löchern zu fabrizieren. Loch- und Gitterziegel haben bessere Isolationseigenschaften und haben zudem ein geringeres Raumgewicht. Sie können daher auch ohne Gewichtserhöhung grösser gestaltet werden als Vollziegel. Dies wiederum ermöglicht es, eine Mauer in kürzerer Zeit als bisher hochzuziehen. Vor einigen Jahrzehnten wurden die schwereren grossformatigen Gitterziegel geschaffen, die zu ihrer besseren Handhabung beim Mauerbau einen Griffschlitz aufweisen. Bereits seit längerer Zeit besteht das Bedürfnis nach einem noch grösseren Mauerziegel, der noch bessere Wärmeisolationseigenschaften als bisherige Mauerziegel aufweist. Es wird dabei sogar in Kauf genommen, dass ein solcher Mauerziegel rund sechzig Kilo schwer ist und zum Mauerbau mit mechanischen Hilfen versetzt werden muss. Der Fabrikation solcher Ziegel, die als sogenannte Wabenziegel bekannt wurden, standen aber bisher erhebliche Hindernisse im Wege. So besteht insbesondere beim Trocknen der grossen Formlinge die Gefahr, dass diese Risse bekommen. Um dies zu vermeiden müssen die Formlinge mit senkrecht angeordneten Löchern getrocknet werden. Dies ermöglicht eine gleichmässige Luftströmung durch die Löcher, so dass die Formlinge gleichmässig trocknen und Risse vermieden werden. Weil nun aber die Extrusionspressen einen waagrechten Tonstrang liefern, müssen die nach dem Schneiden des Tonstrangs gebildeten Formlinge vor dem Einbringen in den Trockenraum um 90 Grad gewendet werden, damit die Löcher senkrecht verlaufen. Es hat sich aber gezeigt, dass zum Wenden des über sechzig Kilo schweren Formlings, dieser weder mit einer Zangenbewegung angefasst noch auf der Unterlagen verschoben werden darf, ohne dass die Gefahr besteht, diesen zu beschädigen.

Es ist daher Aufgabe der vorliegenden Erfindung, ein Verfahren und eine Vorrichtung zu schaffen, die es ermöglichen, grossformatige Formlinge ohne die Gefahr einer Beschädigung zu wenden. Das erfindungsgemässe Verfahren ist durch die Merkmale von Anspruch 1 gekennzeichnet. Es hat den Vorteil, dass beim Wenden nicht durch irgendeine Zangenbewegung Kraft auf den Formling ausgeübt und dieser verformt wird. Auch ist keine Schiebebewegung notwendig, bei welcher der Formling ebenfalls beschädigt werden könnte. Der Formling wird vielmehr behutsam von der ursprünglichen Lage in die um normalerweise 90 Grad verschwenkte Lage gebracht, in welcher die Löcher im Formling mindestens angenähert senkrecht verlaufen. Es hat sich als besonders vorteilhaft erwiesen, zum weiteren Transport des Formlings diesen mit einem Transferorgan vom Auflageorgan abzuheben, seitlich zu verfahren und auf einem Förderer abzulegen. Es wäre aber nach einer Variante des Verfahrens auch möglich, den Formling mit dem Auflageorgan weiter zu transportieren. Zu diesem Zweck kann das Auflageorgan als Förderorgan, z.B. Förderband, ausgebildet sein.

Gemäss dem Verfahren mit den kennzeichnenden Merkmalen von Anspruch 4 wird bei Bedarf der Formling wieder in die ursprüngliche Lage gebracht, in welcher die Löcher praktisch waagrecht angeordnet sind. Dieses Verfahren unterscheidet sich vom Verfahren nach Anspruch 1 dadurch, dass es umgekehrt abläuft. Es kann daher mit der gleichen Art von Vorrichtung durchgeführt werden, wie das Verfahren gemäss Anspruch 1. Wie das Verfahren nach Anspruch 1 hat auch das Verfahren nach Anspruch 4 den Vorteil, dass beim Wenden nicht durch irgendeine Zangenbewegung Kraft auf den Formling ausgeübt und dieser verformt wird. Auch ist keine Verschiebung des Formlings notwendig, bei welcher der Formling beschädigt werden könnte. Da ferner durch eine Relativbewegung zwischen dem Auflageorgan und der Standfläche der Formling vom Auflageorgan wegbewegt wurde, besteht beim Abtransport des Formlings keine Gefahr, dass der Formling am Auflageorgan schleift und dadurch beschädigt wird. Die Übergabe des Formlings auf das Auflageorgan erfolgt vorteilhaft mit einem Transferorgan. Dies kann so erfolgen, dass der Formling z.B. vom Trocknerrost mit dem Transferorgan abgehoben, seitlich verfahren und auf dem Auflageorgan abgelegt wird.

Die Erfindung betrifft auch eine Vorrichtung zum behutsamen Handhaben von Formlingen für die Ziegelfabrikation mit den kennzeichnenden Merkmalen von Anspruch 8. Diese Vorrichtung ist einfach im Aufbau und sicher im Betrieb.

Vorteilhafte Ausführungsformen der Verfahren und der Vorrichtung finden sich in den Unteransprüchen.

Die Erfindung betrifft auch zwei verschiedene Verwendungen der Vorrichtung gemäss den Ansprüchen 15 und 16.

Die Erfindung wird nun unter Bezugnahme auf die Zeichnung beschrieben. Es zeigt:
Fig. 1 eine schematische Ansicht der Wende- und Transfervorrichtung,
Fig. 2 die Vorrichtung von Figur 1, teilweise im Schnitt, von oben betrachtet, und
Fig. 3 eine schematische Darstellung der verschiedenen Verfahrensschritte.

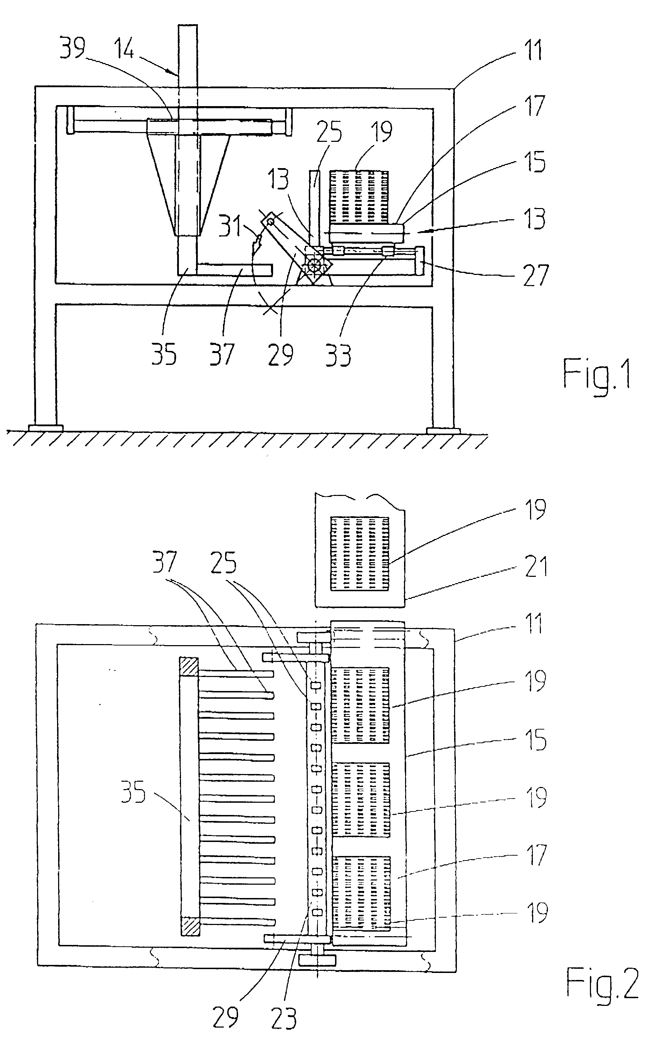

Wie Figuren 1 und 2 zeigen, sind an einem Gestell 11 ein Wendemechanismus 13 und eine Transfereinrichtung 14 angeordnet.

Der Wendemechanismus 13 besitzt eine Förderbahn 15, z.B. ein Förderband, welche eine Standfläche 17 für ein oder mehrere Formlinge 19 bildet. Diese Formlinge 19, werden von einer Fördervorrichtung 21 jeweils dem Förderband 15 übergeben. Der Wendemechanismus 13 besitzt weiter ein Auflageorgan 23. Wie später noch ausgeführt wird, kann bei einer Variante der Vorrichtung das Auflageorgan 23 als Förderorgan ausgebildet sein. Bei der in der Zeichnung dargestellten Ausführungsform hat das Auflageorgan 23 aber z.B. die Form einer Gabel mit Zinken 25 aufweist. Diese Zinken 25 dienen beim Wenden des Formlings 19 als Auflagefläche für diesen. Die Zinken 23 des Auflageorgans 25 sind praktisch in einem rechten Winkel zur Standfläche 17 angeordnet. Ein gemeinsamer Support 27 trägt sowohl die Förderbahn 15 als auch das Auflageorgan 23 und kann mittels einer nicht eingezeichneten Antriebsvorrichtung, welche an einem Hebel 29 angreift, in Richtung des Pfeils 31 um 90 Grad verschwenkt werden. Die Förderbahn 15 ist durch ein Antriebsorgan 33, z.B. einen hydraulischen Zylinder, in bezug auf das Auflageorgan 23 hin- und herverschiebbar.

Die Transfereinrichtung 14 besitzt ein vertikal- und horizontal relativ zum Auflageorgan 23 bewegliches Transferorgan 35. Als Transferorgan 35 dient eine Gabel mit Zinken 37. Die Zinken 37 dienen beim Transfer des Formlings 19 als Auflagefläche für diesen. Die Zinken 37 sind so angeordnet, dass sie zwischen die Zinken 25 des Auflageorgans 23 eingreifen können. Das Transferorgan 35 ist auf einem mit einer nicht eingezeichneten Antriebsvorrichtung horizontal verfahrbaren Wagen 39 angeordnet und kann mit einer weiteren nicht eingezeichneten Antriebsvorrichtung vertikal verfahren werden.

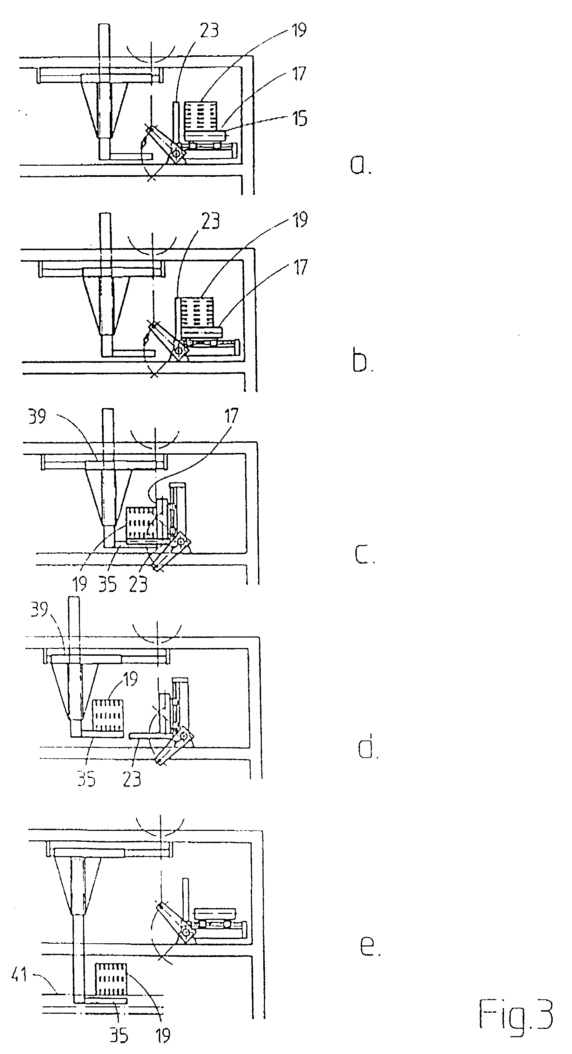

Die Arbeitsweise der Vorrichtung zum behutsamen Handhaben von Formlingen ist in Figur 3 schematisch dargestellt.
a) Ein oder vorzugsweise mehrere Formlinge 19 befinden sich auf dem als Standfläche 17 dienenden Förderband 15, welches stillsteht.
b) Die Standfläche 17 wird gegen das Auflageorgan 23 bewegt. Der Formling 19 befindet sich jetzt in der Wendestellung, in welcher er eine Fläche des Auflageorgans 23 berührt oder beinahe berührt, so dass er beim Wenden nicht auf der Standfläche 17 rutscht.
c) Standfläche 17 und Auflageorgan 23 werden gemeinsam gewendet. Der Formling 19 liegt nun auf dem Auflageorgan 23 auf.
d) Das Transferorgan 35 bewegt sich leicht nach oben und hebt den Formling 19 vom Auflageorgan 23 ab und bewegt sich mit diesem von der Wendeeinrichtung 15 weg.
e) Das Transferorgan 23 bewegt sich nach unten und legt den Formling 19 auf den Trocknerrost 41 ab.

Wie bereits früher erwähnt wurde, kann gemäss einer Variante das Auflageorgan 23 als Förderorgan, z.B. Förderband, ausgebildet sein. In diesem Fall übergibt das Förderband 23 die gewendeten Formlinge (19) an geeignete Fördermittel, mit welchen sie dem Trockenraum zugeführt werden. Bei dieser Variante erübrigt sich eine Transportvorrichtung 14.

Mit dem Trocknerrost 41 werden die Formlinge 19 dem Trockenraum zugeführt.

Es ist möglich, die in Figur 3 dargestellte Vorrichtung auch in umgekehrter Weise arbeiten zu lassen. Sie kann daher auch zum Entladen von Trocknerrosten Anwendung finden. Zur Illustration des Verfahrens kann wiederum Figur 3 dienen, wobei aber die einzelnen Schritte in der umgekehrten Reihenfolge e) bis a) betrachtet werden.
e) Ein oder vorzugsweise mehrere getrocknete Formlinge 19 befinden sich auf aus dem Trockenraum geförderten Trocknerrost 41 und werden von ihrem Standort vom Transferorgan 35 übernommen.
d) Der Formling 19 wird vom Transferorgan 35 vertikal etwas höher als das Auflageorgan 23 gehoben.
c) Der Wagen 39 fährt mit dem Transferorgan 35 gegen die Förderbahn mit der Standfläche 17 und senkt den Formling 19 auf das Auflageorgan 23 ab.
b) Das Auflageorgan 23 und die Standfläche 17 werden gemeinsam gewendet, so dass nun der Formling 19 auf der Standfläche 17 aufliegt.
a) Die Formlinge 19 werden durch eine Relativbewegung zwischen Auflageorgan 23 und Förderbahn 15 vom Auflageorgan 23 entfernt. Das Förderband 15 kann jetzt in Betrieb gesetzt werden, um den oder die Formlinge 19 einer weiteren Fördervorrichtung zu übergeben.

Es sind verschiedene Änderungen möglich, ohne von der Erfindung abzuweichen. So ist es z.B. auch möglich, das Auflageorgan 23 gegen den Formling 19 zu bewegen, statt das Förderband 15 mit dem Formling 19 gegen das Auflageorgan 23 quer zu verschieben.

### Zusammenfassend kann festgestellt werden:

Das Verfahren und die Vorrichtung ermöglichen ein Wenden von Formlingen 19 für die Ziegelfabrikation, ohne dass bei den Formlingen, insbesondere bei grossformatigen Formlingen die Gefahr einer Beschädigung entsteht.

Nach ihrer Einführung in die Vorrichtung befinden sich ein oder mehrere Formlinge 19 auf der durch eine Förderbahn 15 gebildeten Standfläche 17. Durch eine Bewegung des stillstehenden Förderbandes 15 quer zur Förderrichtung wird der Formling 19 gegen die in senkrechter Stellung sich befindliche Gabel 23 bewegt, so dass eine Fläche des Formlings 19 an dieser anliegt. Hierauf erfolgt das Wenden um praktisch 90 Grad, ohne dass der Formling 19 rutscht und dabei Gefahr läuft, beschädigt zu werden. Der Formling 19 liegt nun auf der in waagrechter Stellung befindlichen Gabel 23 und kann von der Gabel 35 der Transfereinrichtung übernommen und auf dem Trocknerrost 41 abgeladen werden.

## Patentansprüche

1. Verfahren zum Wenden von Formlingen (19), insbesondere grossformatigen Formlingen mit Hohlräumen, für die Ziegelfabrikation, dadurch gekennzeichnet, dass der Formling (19) nach dem Einführen in eine Wendevorrichtung auf seiner Standfläche (17) durch eine Relativbewegung zwischen der Standfläche (17) und einem Auflageorgan (23) in Berührung oder beinahe Berührung mit dem Formling (19) gebracht wird, dass die Standfläche (17) und das Auflageorgan (23) gemeinsam gewendet werden, worauf der Formling (19) nach dem Aufliegen auf dem Auflageorgan (23) weiter transportiert wird.

2. Verfahren zum Wenden von Formlingen nach Anspruch 1, dadurch gekennzeichnet, dass der Formling (19) mit einem Transferorgan (35) vom Auflageorgan (23) abgehoben, seitlich verfahren und auf einem Förderer (41) abgelegt wird.

3. Verfahren zum Wenden von Formlingen nach Anspruch 1, dadurch gekennzeichnet, dass der Formling (19) von dem als Förderorgan, z.B. Förderband, ausgebildete Auflageorgan (23) weiter transportiert wird.

4. Verfahren zum Wenden von Formlingen, insbesondere grossen Formlingen mit Hohlräumen, für die Ziegelfabrikation, dadurch gekennzeichnet, dass zum Wenden der Formling (19) einem Auflageorgan (23) übergeben wird, dass das Auflageorgan (23) und eine Standfläche (17) gemeinsam gewendet werden, worauf der Formling (19) auf der Standfläche (17) aufliegt, dass das Auflageorgan (23) durch eine Relativbewegung zwischen dem Auflageorgan (23) und der Standfläche (17) vom Formling entfernt und der Formling (19) durch Bewegen der Standfläche (17) einem Förderer übergeben wird.

5. Verfahren nach Anspruch 4, dadurch gekennzeichnet, dass die Übergabe des Formlings (19) auf das Auflageorgan (23) mit einem Transferorgan (35) erfolgt.

6. Verfahren nach Anspruch 4, dadurch gekennzeichnet dass zur Übergabe des Formlings (19) auf das Auflageorgan (23) der Formling (19) mit dem Transferorgan (35) von seinem Standort abgehoben, seitlich verfahren und auf dem Auflageorgan (23) abgelegt wird.

7. Verfahren nach einem der Ansprüche 1 bis 6, dadurch gekennzeichnet, dass gleichzeitig mehrere Formlinge von der Wende- und Transfervorrichtung gehandhabt werden.

8. Wendevorrichtung zum Wenden von Formlingen, insbesondere von grossformatigen Formlingen mit Hohlräumen, für die Ziegelfabrikation, dadurch gekennzeichnet, dass eine Wendeeinrichtung (13) vorgesehen ist, welche eine eine Standfläche (17) für den Formling (19) bildende Förderbahn (15), ein relativ quer zur Förderbahn (15) bewegliches Auflageorgan (23) und Antriebsmittel zum gleichzeitigen Wenden der Standfläche (17) und des Auflageorgans (23) aufweist, und dass Mittel (14,23) zum Abtransport der gewendeten Formlinge (19) aus der Wendevorrichtung vorgesehen sind.

9. Wendevorrichtung nach Anspruch 8, dadurch gekennzeichnet, dass weiter eine Transfereinrichtung (14) mit einem vertikal und horizontal relativ zum Auflageorgan (23) beweglichen Transferorgan (35) vorgesehen ist.

10. Wendevorrichtung nach Anspruch 8, dadurch gekennzeichnet, dass das Auflageorgan (23) als Förderorgan, z.B. Förderband, zum Abtransport der Formlinge ausgebildet ist.

11. Vorrichtung nach Anspruch 9 oder 10, dadurch gekennzeichnet, dass das Auflageorgan (23) eine Gabel mit Zinken (25) ist, und dass die Zinken (25) beim Wenden des Formlings (19) als Auflagefläche für den Formling dienen.

12. Vorrichtung nach Anspruch 11, dadurch gekennzeichnet, dass das Transferorgan (35) eine Gabel mit Zinken (37) ist, die beim Transfer des Formlings (19) als Auflagefläche für den Formling dienen, wobei die Zinken (37) derart angeordnet sind, dass sie zwischen die Zinken (25) des Auflageorgans (23) eingreifen können.

13. Vorrichtung nach einem der Ansprüche 9 bis 12, dadurch gekennzeichnet, dass das Transferorgan (35) auf einem mit einer Antriebsvorrichtung horizontal verfahrbaren Wagen (39) angeordnet ist.

14. Vorrichtung nach einem der Ansprüche 9 bis 13, dadurch gekennzeichnet, dass die Förderbahn (15) durch ein Antriebsorgan (33), z.B. durch einen hydraulischen Zylinder, quer zur Bahnrichtung hin- und herbeweglich ist.

15. Verwendung der Vorrichtung nach einem der Ansprüche 8 bis 14 zum Wenden der Formlinge (19) vor deren Förderung in einen Trockenraum.

16. Verwendung der Vorrichtung nach einem der Ansprüche 8 bis 14 zum Wenden der getrockneten Formlinge (19) nach deren Trocknung.
